(19) **Europäisches Patentamt / European Patent Office / Office européen des brevets**

(11) **EP 1 944 721 A2**

(12) # EUROPEAN PATENT APPLICATION

(43) Date of publication:
**16.07.2008 Bulletin 2008/29**

(51) Int Cl.:
***G06K 9/00*** *(2006.01)*    ***B60R 1/00*** *(2006.01)*

(21) Application number: **07123698.8**

(22) Date of filing: **19.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **10.01.2007 JP 2007002702**

(71) Applicant: **OMRON CORPORATION**
**Kyoto-shi, Kyoto 600-8530 (JP)**

(72) Inventor: **Iketani, Takashi**
**c/o OMRON CORPORATION**
**801,Minamifudodo-cho,**
**Kyoto-shi, Kyoto 600-8530 (JP)**

(74) Representative: **Brykman, Georges**
**Osha Liang**
**121, Avenue des Champs Élysées**
**F-75008 Paris (FR)**

(54) **Image processing apparatus, method and program product thereof**

(57)    The performance of detecting the features of an object is to be improved. In one step, among pixels within a ROI, pixels whose feature amount is greater than a predetermined threshold value are extracted as a feature point candidate. In another step, a feature point density parameter is set based on a distance to an object within the ROI. In another steps, the feature points are extracted from the feature point candidates in the descending order of the feature amount, while the feature point candidates, whose distance from the extracted feature points is equal to or smaller than the feature point density parameter, are not extracted as the feature point. In another step, a feature point list representing the feature points extracted from the ROI is output. The present invention can be applied to an in-vehicle obstacle detecting device.

*FIG. 1*

EP 1 944 721 A2

**Description**

BACKGROUND OF THE INVENTION

1. Field of the Invention

The present invention relates to an image processing apparatus, method and program thereof, and more particularly, to an image processing apparatus, method and program thereof, for detecting the features of an object.

2. Description of Related Art

In related-art in-vehicle image processing apparatuses, there is proposed a technology in which the size and position of the image data that are subjected to an image analysis process are changed based on a fade-out coordinate, a vehicle speed, and a yaw rate of the vehicle about its vertical axis (see WO2005/24754 (Patent Document 1), for example).

In the past, there is also proposed a technology in which the boundaries of subjects are specified based on distance information of the subjects for each of predetermined partial regions within an image, and a predetermined subject is trimmed or emphasized (see JP-A-2006-311505 (Patent Document 2), for example).

In in-vehicle obstacle detecting devices, the intensity at the corner of an image captured in the forward area of a vehicle is calculated as a feature amount, and a feature point is extracted based on the calculated feature amount, thereby detecting a movement of an object in the forward area of the vehicle using the extracted feature point.

However, in the case of extracting the feature point based on the feature amount, the number of feature points extracted for an object at a distant location is insufficiently small, deteriorating the detection precision. On the other hand, the number of feature points extracted for an object at a nearby location is unnecessarily large, increasing the processing load.

SUMMARY OF THE INVENTION

The present invention has been made in view of such circumstances, and its object is to improve the performance of detecting the features of an object.

An image processing apparatus according to one aspect of the present invention includes a feature amount calculating means for calculating a feature amount of pixels within a region of an object detected by a radar, the region including the entire or a portion of the object and being a designated region in an image; and a feature point extracting means for extracting a feature point for detecting the features of the object from a feature point candidate, which is the pixels within the region having a feature amount equal to or greater than a predetermined threshold value, the feature point being extracted with a higher density as the distance of the object from a vehicle increases.

In the image processing apparatus according to the above aspect of the present invention, a feature amount of pixels within a region of an object that is detected by a radar is calculated, in which the region includes the entire or a portion of the object and is a designated region in an image. A feature point for detecting the features of the object is extracted from a feature point candidate, which is the pixels within the region having a feature amount equal to or greater than a predetermined threshold value, in which the feature point is extracted with a higher density as the distance of the object from a vehicle increases.

Therefore, it is possible to improve the performance of detecting the features of the object.

The feature amount calculating means and the feature point extracting means can be configured by a CPU (Central Processing Unit), for example.

The image processing apparatus may further include a minimum gap setting means for setting a minimum gap, which is the minimum value of the gap provided between the feature points, the minimum gap decreasing as the distance of the object from the vehicle increases. The feature point extracting means may extract the feature point from the feature point candidate so that the gap between the feature points is greater than the minimum gap.

With this, it is possible to prevent the feature points from being concentrated within a narrow range.

The minimum gap setting means can be configured by a CPU (Central Processing Unit), for example.

The feature point extracting means may extract the feature point from the feature point candidate in the descending order of the feature amount, and the feature point candidate whose distance from the extracted feature point is equal to or smaller than the minimum gap may not be extracted as the feature point.

With this, it is possible to extract the feature points that can better represent the features of the object while preventing the feature points from being concentrated within a narrow range.

The feature amount may be an intensity of the corner of the image.

With this, it is possible to improve the performance of detecting the features of the object based on the corner of the image.

The feature point may be used to detect a movement vector of the object.

With this, it is possible to improve the performance of detecting the movement of the object.

The image may be an image of the surroundings of the vehicle captured by a camera provided on the vehicle; the radar may be provided on the vehicle; and the object may be an object detected by the radar from the surroundings of the vehicle.

With this, it is possible to improve the performance of detecting the features of the object detected from the surroundings of the vehicle.

A detection method or program according to one aspect of the present invention includes a feature amount calculating step for calculating a feature amount of pixels within a region of an object detected by a radar, the region including the entire or a portion of the object and being a designated region in an image; and a feature point extracting step for extracting a feature point for detecting the features of the object from a feature point candidate, which is the pixels within the region having a feature amount equal to or greater than a predetermined threshold value, the feature point being extracted with a higher density as the distance of the object from a vehicle increases.

In the detection method or program according to the above aspect of the present invention, a feature amount of pixels within a region of an object that is detected by a radar is calculated, in which the region includes the entire or a portion of the object and is a designated region in an image. A feature point for detecting the features of the object is extracted from a feature point candidate, which is the pixels within the region having a feature amount equal to or greater than a predetermined threshold value, in which the feature point is extracted with a higher density as the distance of the object from a vehicle increases.

Therefore, it is possible to improve the performance of detecting the features of the object.

The feature amount calculating step is configured by a CPU, for example, that executes a feature amount calculating step for calculating a feature amount of pixels within a region of an object detected by a radar, the region including the entire or a portion of the object and being a designated region in an image. The feature point extracting step is configured by a CPU, for example, that executes a feature point extracting step for extracting a feature point for detecting the features of the object from a feature point candidate, which is the pixels within the region having a feature amount equal to or greater than a predetermined threshold value, the feature point being extracted with a higher density as the distance of the object from a vehicle increases.

According to the aspects of the present invention, it is possible to extract the feature point for detecting the features of an object from a designated region in an image. According to the aspects of the present invention, it is also possible to improve the performance of detecting the features of the object.

BRIEF DESCRIPTION OF THE DRAWINGS

Fig. 1 is a block diagram showing one embodiment of an obstacle detection system to which the present invention is applied.

Fig. 2 is a diagram showing an example of detection results of a laser radar.

Fig. 3 is a diagram showing an example of forward images.

Fig. 4 is a block diagram showing a detailed functional construction of a clustering portion shown in Fig. 1.

Fig. 5 is a flow chart for explaining an obstacle detection process executed by the obstacle detection system.

Fig. 6 is a flow chart for explaining the details of an ROI setting process of step S5 in Fig. 5.

Fig. 7 is a diagram showing an example of a detection region.

Fig. 8 is a diagram for explaining the types of objects that are extracted as a process subject.

Fig. 9 is a diagram for explaining an exemplary ROI setting method.

Fig. 10 is a diagram showing an example of the forward image and the ROI.

Fig. 11 is a flow chart for explaining the details of a feature point extraction process of step S7 in Fig. 5.

Fig. 12 is a diagram showing an example of the feature amount of each pixel within an ROI.

Fig. 13 is a diagram for explaining sorting of feature point candidates.

Fig. 14 is a diagram for explaining a specific example of the feature point extraction process.

Fig. 15 is a diagram for explaining a specific example of the feature point extraction process.

Fig. 16 is a diagram for explaining a specific example of the feature point extraction process.

Fig. 17 is a diagram for explaining a specific example of the feature point extraction process.

Fig. 18 is a diagram showing an example of the feature points extracted based only on a feature amount.

Fig. 19 is a diagram showing an example of the feature points extracted by the feature point extraction process of Fig. 11.

Fig. 20 is a diagram showing an example of the feature points extracted from the forward images shown in Fig. 10.

Fig. 21 is a diagram showing an example of a movement vector detected from the forward images shown in Fig. 10.
Fig. 22 is a diagram for explaining the details of the clustering process of step S9 in Fig. 5.
Fig. 23 is a diagram for explaining a method of detecting the types of movement vectors.
Fig. 24 is a diagram showing an example of the detection results for the forward images shown in Fig. 10.
Fig. 25 is a block diagram showing an exemplary construction of a computer.

DESCRIPTION OF PREFERRED EMBODIMENTS

Hereinafter, an embodiment of the present invention will be described with reference to the accompanying drawings.

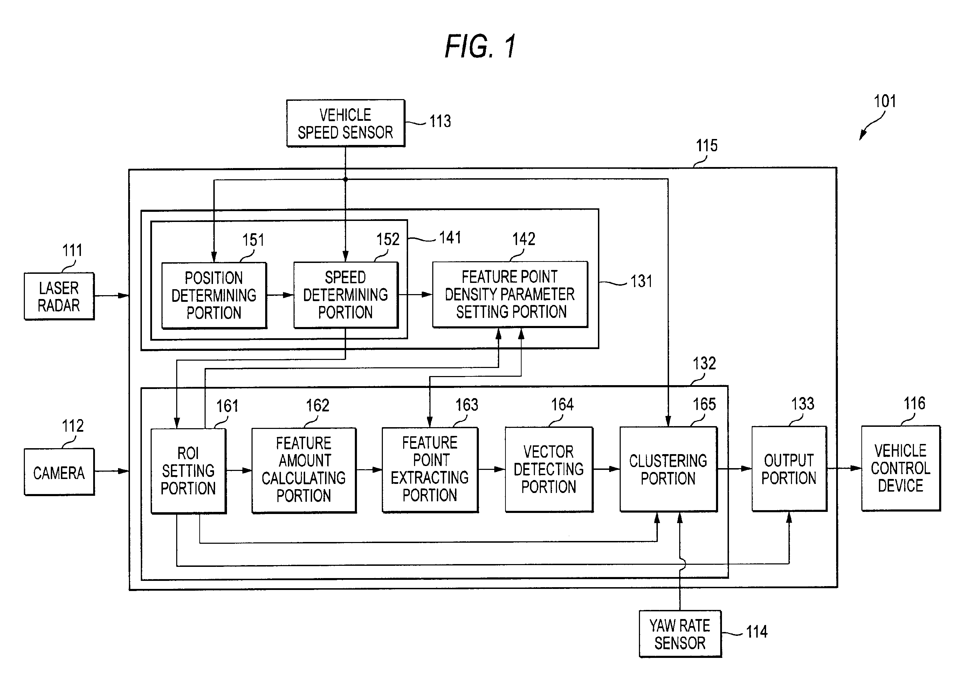

Fig. 1 is a block diagram showing one embodiment of an obstacle detection system to which the present invention is applied. The obstacle detection system 101 shown in Fig. 1 is provide on a vehicle, for example, and is configured to detect persons (for example, pedestrians, stationary persons, etc.) in the forward area of the vehicle (hereinafter also referred to as an automotive vehicle) on which the obstacle detection system 101 is provided and to controls the operation of the automotive vehicle according to the detection results.

The obstacle detection system 101 is configured to include a laser radar 111, a camera 112, a vehicle speed sensor 113, a yaw rate sensor 114, an obstacle detecting device 115, and a vehicle control device 116.

The laser radar 111 is configured by a one-dimensional scan-type laser radar, for example, that scans in a horizontal direction. The laser radar 111 is provided substantially parallel to the bottom surface of the automotive vehicle to be directed toward the forward area of the automotive vehicle, and is configured to detect an object (for example, vehicles, persons, obstacles, architectural structures, road-side structures, road traffic signs and signals, etc.) in the forward area of the automotive vehicle, the object having a reflection light intensity equal to or greater than a predetermined threshold value, and the reflection light being reflected from the object after a beam (laser light) is emitted from the laser radar 111. The laser radar 111 supplies object information to the obstacle detecting device 115, the information including an x- and z-axis directional position (X, Z) of the object detected at predetermined intervals in a radar coordinate system and a relative speed (dX, dZ) in the x- and z-axis directions of the object relative to the automotive vehicle. The object information supplied from the laser radar 111 is temporarily stored in a memory (not shown) or the like of the obstacle detecting device 115 so that portions of the obstacle detecting device 115 can use the object information.

In the radar coordinate system, a beam emitting port of the laser radar 111 corresponds to a point of origin; a distance direction (front-to-back direction) of the automotive vehicle corresponds to the z-axis direction; the height direction perpendicular to the z-axis direction corresponds to the y-axis direction; and the transversal direction (left-to-right direction) of the automotive vehicle perpendicular to the z-and y-axis directions corresponds to the x-axis direction. In addition, the right direction of the radar coordinate system is a positive direction of the x axis; the upward direction thereof is a positive direction of the y axis; and the forward direction thereof is a positive direction of the z axis.

The x-axis directional position X of the object is calculated by a scan angle of the beam at the time of receiving the reflection light from the object, and the z-axis directional position Z of the object is calculated by a delay time until the reflection light from the object is received after the beam is emitted. The relative speed (dX(t), dZ(t)) of the object at a time point t is calculated by the following expressions (1) and (2).

$$dX(t) = \frac{1}{N} \sum_{k=0}^{N-1} \{ X(t-k) - X(t-k-1) \} \qquad \cdots (1)$$

$$dZ(t) = \frac{1}{N} \sum_{k=0}^{N-1} \{ Z(t-k) - Z(t-k-1) \} \qquad \cdots (2)$$

In the expressions (1) and (2), N represents the number of object tracking operations made; and X(t-k) and Z(t-k) represent the x- and z-axis directional positions of the object calculated k times before, respectively. That is, the relative speed of the object is calculated based on the amount of displacement of the position of the object.

The camera 112 is configured by a camera, for example, using a CCD image sensor, a CMOS image sensor, a logarithmic transformation-type image sensor, etc. The camera 112 is provided substantially parallel to the bottom surface of the automotive vehicle to be directed toward the forward area of the automotive vehicle, and is configured to output an image (hereinafter, referred to as a forward image) captured in the forward area of the automotive vehicle at predetermined intervals to the obstacle detecting device 115. The forward image supplied from the camera 112 is temporarily stored in a memory (not shown) or the like of the obstacle detecting device 115 so that portions of the obstacle detecting device 115 can use the forward image.

The central axis (an optical axis) of the laser radar 111 and the camera 112 is preferably substantially parallel to each other.

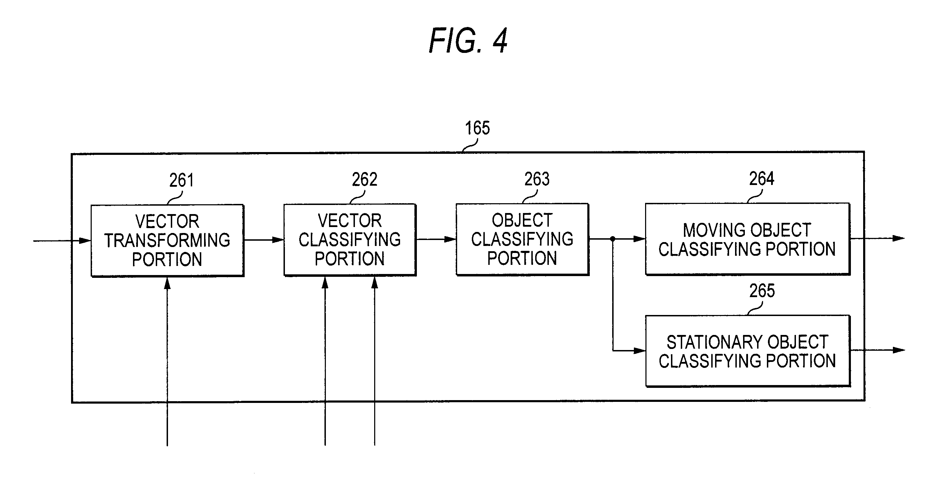

The vehicle speed sensor 113 detects the speed of the automotive vehicle and supplies a signal representing the detected vehicle speed to portions of the obstacle detecting device 115, the portions including a position determining portion 151, a speed determining portion 152, and a vector classifying portion 262 (Fig. 4) of a clustering portion 165. Incidentally, the vehicle speed sensor 113 may be configured, for example, by a vehicle speed sensor that is provided on the automotive vehicle, or may be configured by a separate sensor.

The yaw rate sensor 114 is a sensor that detects an angular speed in the turning direction of the automotive vehicle, and is configured to supply a signal representing the detected angular speed to a vector transforming portion 261 (Fig. 4) of the clustering portion 165 of the obstacle detecting device 115. Incidentally, the yaw rate sensor 114 may be configured, for example, by a yaw rate sensor that is provided on the automotive vehicle, or may be configured by a separate sensor.

The obstacle detecting device 115 is configured, for example, by a CPU (Central Processing Unit), ROM (Read Only Memory), RAM (Random Access Memory), etc., and is configured to detect persons present in the forward area of the automotive vehicle and to supply information representing the detection results to the vehicle control device 116.

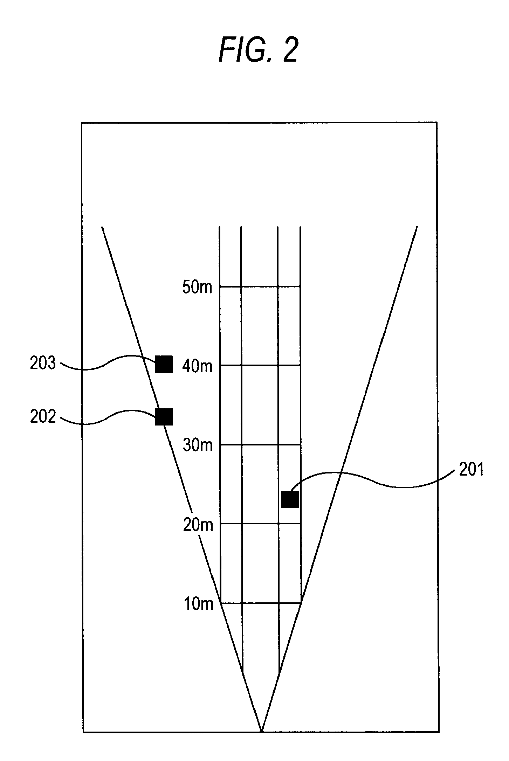

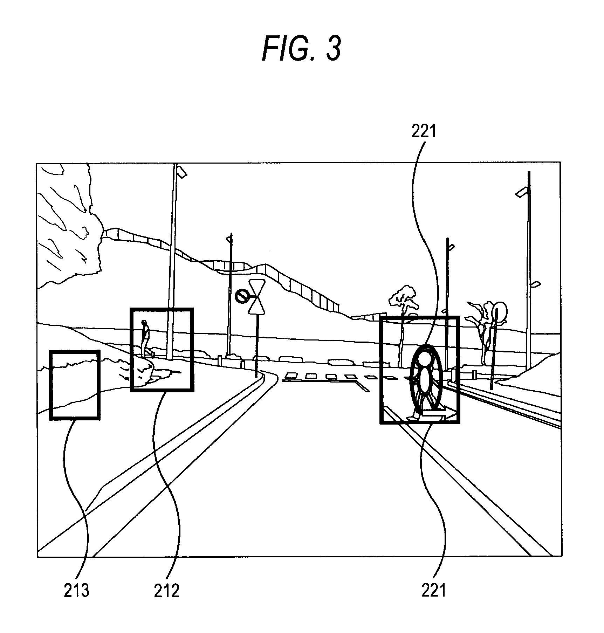

Next, referring to Figs. 2 and 3, an outline of the process executed by the obstacle detecting device 115 will be described. Fig. 2 is a bird' s-eye view showing an example of the detection results of the laser radar 111. In the drawing, the distance represents a distance from the automotive vehicle; and among four vertical lines, the inner two lines represent a vehicle width of the automotive vehicle and the outer two lines represent a lane width of the lanes along which the automotive vehicle travels. In the example of Fig. 2, an object 201 is detected within the lanes on the right side of the automotive vehicle and at a distance greater than 20 meters from the automotive vehicle, and additionally, another objects 202 and 203 are detected off the lanes on the left side of the automotive vehicle and respectively at a distance greater than 30 meters and at a distance of 40 meters, from the automotive vehicle.

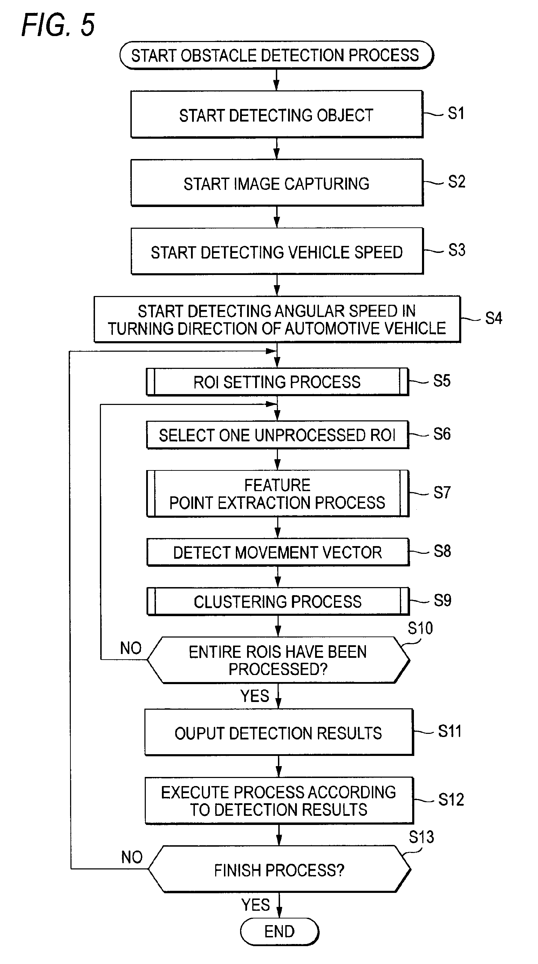

Fig. 3 shows an example of the forward image captured by the camera 112 at the same time point as when the detection of Fig. 2 was made. As will be described with reference to Fig. 5 or the like, in the forward image shown in Fig. 3, the obstacle detecting device 115 sets a region 211 corresponding to the object 201, a region 212 corresponding to the object 202, and a region 213 corresponding to the object 203, as ROIs (Region Of Interest; interest region) and performs image processing to the set ROIs, thereby detecting persons in the forward area of the automotive vehicle. In the case of the example shown in Fig. 3, the position, movement direction, speed, or the like of the person present within an area 221 of the ROI 211 is output as the detection results from the obstacle detecting device 115 to the vehicle control device 116.

As will be described with reference to Fig. 5 or the like, the obstacle detecting device 115 is configured to extract objects to be subjected to the process based on the position and speed of the object and to perform the image processing only to the extracted objects, rather than processing the entire objects detected by the laser radar 111.

Referring to Fig. 1, the obstacle detecting device 115 is configured to further include an object information processing portion 131, an image processing portion 132, and an output portion 133.

The object information processing portion 131 is a block that processes the object information supplied from the laser radar 111, and is configured to include an object extracting portion 141 and a feature point density parameter setting portion 142.

The object extracting portion 141 is a block that extracts objects to be processed by the image processing portion 132 from the objects detected by the laser radar 111, and is configured to include the position determining portion 151 and the speed determining portion 152.

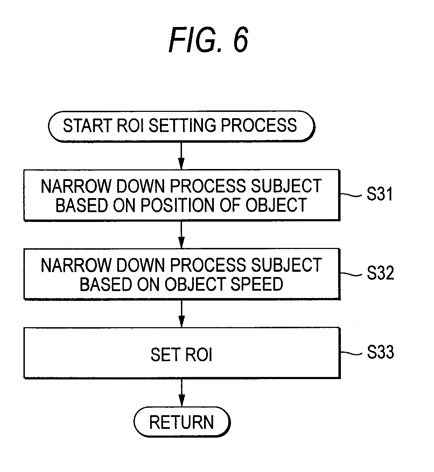

As will be described with reference to Fig. 6 or the like, the position determining portion 151 sets a detection region based on the speed of the automotive vehicle detected by the vehicle speed sensor 113 and extracts objects present within the detection region from the objects detected by the laser radar 111, thereby narrowing down the object to be process by the image processing portion 132. The position determining portion 151 supplied information representing the object extraction results to the speed determining portion 152.

As will be described with reference to Fig. 6 or the like, the speed determining portion 152 narrows down the object to be subjected to the process of the image processing portion 132 by extracting the objects whose speed satisfies a predetermined condition from the objects extracted by the position determining portion 151. The speed determining portion 152 supplies information representing the object extraction results and the object information corresponding to the extracted objects to the ROI setting portion 161. The speed determining portion 152 also supplies the object extraction results to the feature point density parameter setting portion 142.

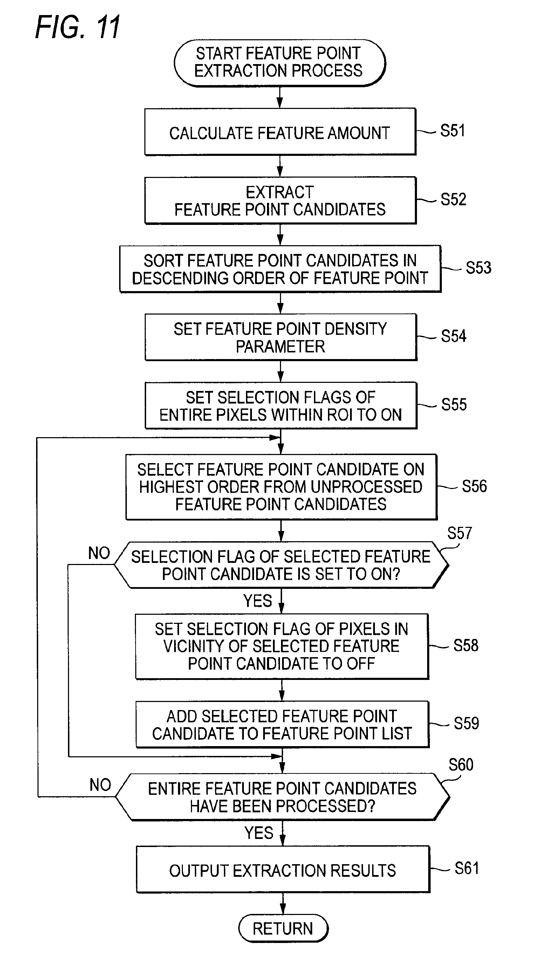

As will be described with reference to Fig. 11 or the like, the feature point density parameter setting portion 142 sets a feature point density parameter for each of the ROIs set by the ROI setting portion 161 based on the distance of the object within the ROIs from the automotive vehicle, the parameter representing a density of a feature point extracted within the ROIs. The feature point density parameter setting portion 142 supplies information representing the set feature point density parameter to the feature point extracting portion 163.

The image processing portion 132 is a block that processes the forward image captured by the camera 112, and is configured to include the ROI setting portion 161, a feature amount calculating portion 162, the feature point extracting portion 163, a vector detecting portion 164, and a clustering portion 165.

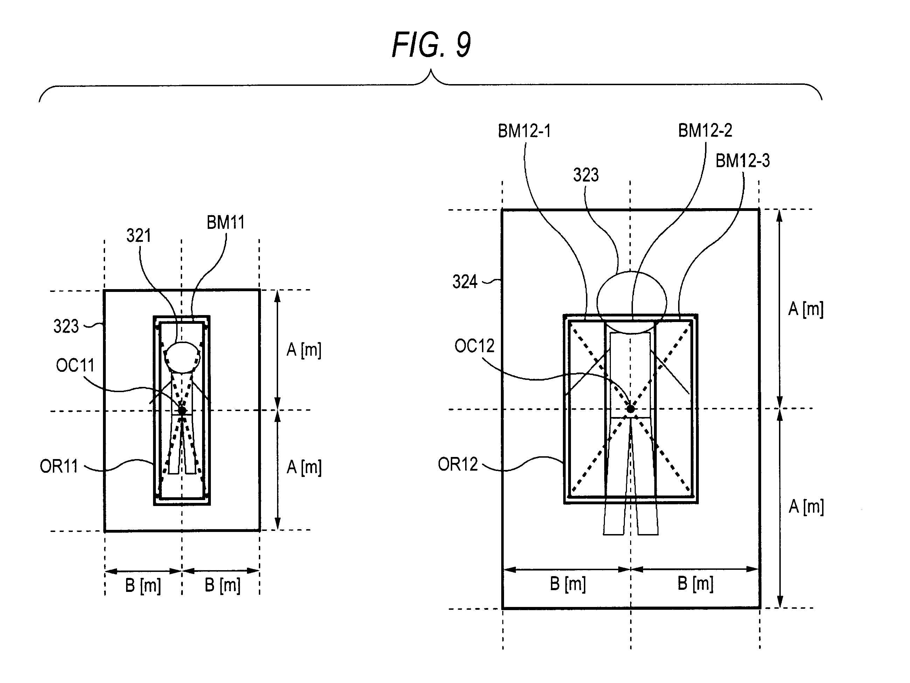

As will be described with reference to Fig. 9 or the like, the ROI setting portion 161 sets ROIs for each object extracted by the object extracting portion 141. The ROI setting portion 161 supplies information representing the position of each ROI in the forward image to the feature amount calculating portion 162. The ROI setting portion 161 also supplies information representing the distance of the object within each ROI from the automotive vehicle to the vector classifying portion 262 (Fig. 4) of the clustering portion 165. The ROI setting portion 161 also supplies information representing the position of each ROI in the forward image and in the radar coordinate system to the feature point density parameter setting portion 142. The ROI setting portion 161 also supplies the information representing the position of each ROI in the forward image and in the radar coordinate system and the object information corresponding to the object within each ROI to the output portion 133.

As will be described with reference to Fig. 11 or the like, the feature amount calculating portion 162 calculates a predetermined type of feature amount of the pixels within each ROI. The feature amount calculating portion 162 supplies information representing the position of the processed ROIs in the forward image and the feature amount of the pixels within each ROI to the feature point extracting portion 163.

The feature point extracting portion 163 supplies information representing the position of the ROIs in the forward image, from which the feature point is to be extracted, to the feature point density parameter setting portion 142. As will be described with reference to Fig. 11 or the like, the feature point extracting portion 163 extracts the feature point of each ROI based on the feature amount of the pixels and the feature point density parameter. The feature point extracting portion 163 supplies the information representing the position of the processed ROIs in the forward image and the information representing the position of the extracted feature point to the vector detecting portion 164.

As will be described with reference to Fig. 11 or the like, the vector detecting portion 164 detects a movement vector at the feature points extracted by the feature point extracting portion 163. The vector detecting portion 164 supplies information representing the detected movement vector and the position of the processed ROIs in the forward image to the vector transforming portion 261 (Fig. 4) of the clustering portion 165.

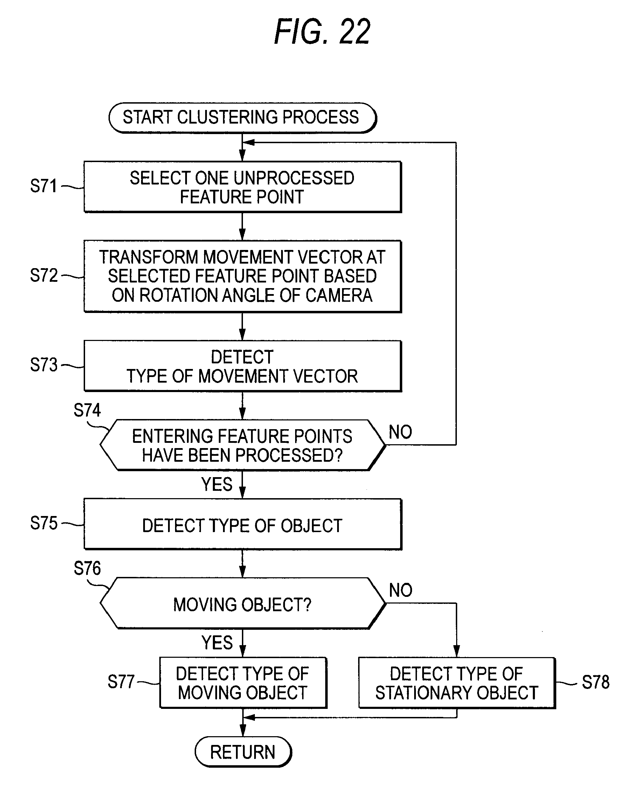

As will be described with reference to Fig. 22 or the like, the clustering portion 165 classifies the type of the objects within each ROI. The clustering portion 165 supplies information representing the classification results to the output portion 133.

The output portion 133 supplies information representing the detection results including the type, position, movement direction, and speed of the detected objects to the vehicle control device 116.

The vehicle control device 116 is configured, for example, by an ECU (Electronic Control Unit), and is configured to control the operation of the automotive vehicle and various in-vehicle devices provided on the automotive vehicle based on the detection results of the obstacle detecting device 115.

Fig. 4 is a block diagram showing a detailed functional construction of the clustering portion 165. The clustering portion 165 is configured to include the vector transforming portion 261, the vector classifying portion 262, an object classifying portion 263, a moving object classifying portion 264, and a stationary object classifying portion 265.

As will be described with reference to Fig. 22, the vector transforming portion 261 calculates a movement vector (hereinafter also referred to as a transformation vector) based on the angular speed in the turning direction of the automotive vehicle detected by the yaw rate sensor 114 by subtracting a component generated by the rotation of the camera 112 in the turning direction accompanied by the rotation in the turning direction of the automotive vehicle from the components of the movement vector detected by the vector detecting portion 164. The vector transforming portion 261 supplies information representing the calculated transformation vector and the position of the processed ROIs in the forward image to the vector classifying portion 262.

As will be described with reference to Fig. 22 or the like, the vector classifying portion 262 detects the type of the movement vector detected at each feature point based on the transformation vector, the position of the feature point in the forward image, the distance of the object from the automotive vehicle, and the speed of the automotive vehicle detected by the vehicle speed sensor 113. The vector classifying portion 262 supplies information representing the type of the detected movement vector and the position of the processes ROIs in the forward image to the object classifying portion 263.

As will be described with reference to Fig. 22, the object classifying portion 263 classifies the objects within the ROIs based on the movement vector classification results, the objects being classified into either an object that is moving (the object hereinafter also referred to as a moving object) or an object that is stationary still (the object hereinafter also referred to as a stationary object). When the object classifying portion 263 classifies the object within the ROI as being the moving object, the object classifying portion 263 supplies information representing the position of the ROI containing the moving object in the forward image to the moving object classifying portion 264. On the other hand, when the object classifying portion 263 classifies the object within the ROI as being the stationary object, the object classifying portion 263 supplies information representing the position of the ROI containing the stationary object in the forward image to the stationary object classifying portion 265.

The moving object classifying portion 264 detects the type of the moving object within the ROI using a predetermined image recognition technique. The moving object classifying portion 264 supplies information representing the type of the moving object and the position of the ROI containing the moving object in the forward image to the output portion 133.

The stationary object classifying portion 265 detects the type of the stationary object within the ROI using a predetermined image recognition technique. The stationary object classifying portion 265 supplies information representing the type of the stationary obj ect and the position of the ROI containing the stationary object in the forward image to the output portion 133.

Next, an obstacle detection process executed by the obstacle detection system 101 will be described with reference to the flow chart of Fig. 5. The process is initiated when the engine of the automotive vehicle is started.

In step S1, the laser radar 111 starts detecting objects. The laser radar 111 starts the supply of the object information including the position and relative speed of the detected objects to the obstacle detection system 115. The object information supplied from the laser radar 111 is temporarily stored in a memory (not shown) or the like of the obstacle detecting device 115 so that portions of the obstacle detecting device 115 can use the object information.

In step S2, the camera 112 starts image capturing. The camera 112 starts the supply of the forward image captured in the forward area of the automotive vehicle to the obstacle detecting device 115. The forward image supplied from the camera 112 is temporarily stored in a memory (not shown) or the like of the obstacle detecting device 115 so that portions of the obstacle detecting device 115 can use the forward image.

In step S3, the vehicle speed sensor 113 starts detecting the vehicle speed. The vehicle speed sensor 113 stars the supply of the signal representing the vehicle speed to the position determining portion 151, the speed determining portion 152, and the vector classifying portion 262.

In step S4, the yaw rate sensor 114 starts detecting the angular speed in the turning direction of the automotive vehicle. In addition, the yaw rate sensor 114 starts the supply of the signal representing the detected angular speed to the vector transforming portion 261.

In step S5, the obstacle detecting device 115 executes an ROI setting process. The details of the ROI setting process will be described with reference to the flow chart of Fig. 6.

In step S31, the position determining portion 151 narrows down the process subject based on the position of the objects. Specifically, the position determining portion 151 narrows down the process subject by extracting the objects that satisfy the following expression (3) based on the position (X, Z) of the objects detected by the laser radar 111.

$$|X| < Xth \text{ and } Z < Zth \ldots (3)$$

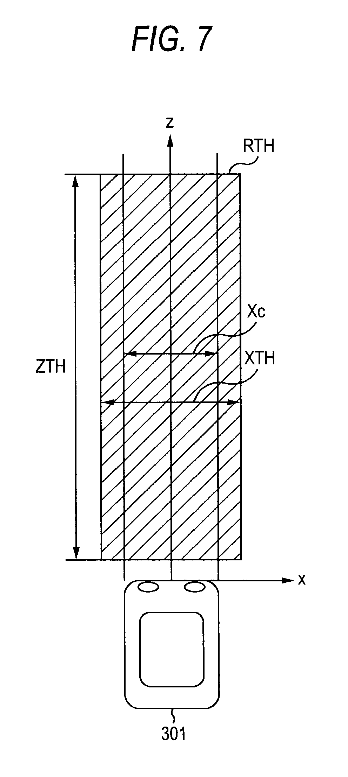

In the expression (3), Xth and Zth are predetermined threshold values. Therefore, if the vehicle 301 shown in Fig. 7 is the automotive vehicle, objects present within a detection region Rth having a width of Xth and a length of Zth in the forward area of the vehicle 301 are extracted.

The threshold value Xth is set to a value obtained by adding a predetermined length as a margin to the vehicle width (a width Xc of the vehicle 301 in Fig. 7) or to the lane width the lanes along which the automotive vehicle travels.

The Zth is set to a value calculated based on the following expression (4).

$$Zth(m) = \text{automotive vehicle speed } (m/s) \times Tc \text{ (s)} \ldots (4)$$

In the expression, the time Tc is a constant set based on a collision time (TTC: Time to Collision) or the like, which is the time passed until the automotive vehicle traveling at a predetermined speed (for example, 60 km/h) collides with a pedestrian in the forward area of the automotive vehicle at a predetermined distance (for example, 100 meters).

With this, objects present outside the detection region Rth, where the likelihood of being collided with the automotive vehicle are excluded from the process subject.

Incidentally, the detection region is a region set based on the likelihood of the automotive vehicle colliding with objects present within the region, and is not necessarily rectangular as shown in Fig. 7. In addition, in the case of a curved lane, for example, the width Xth of the detection region may be increased.

The position determining portion 151 supplies information representing the object extraction results to the speed determining portion 152.

In step S32, the speed determining portion 152 narrows down the process subject based on the speed of objects. Specifically, the speed determining portion 152 narrows down the process subject by extracting, from the objects extracted by the position determining portion 151, objects that satisfy the following expression (5).

$$|Vv(t) + dZ(t)| \leq \varepsilon \ \dots \ (5)$$

In the expression, Vv(t) represents the speed of the automotive vehicle at a time point t, and dZ(t) represents a relative speed of the object at a time point t in the z-axis direction (distance direction) with respect to the automotive vehicle. Incidentally, $\varepsilon$ is a predetermined threshold value.

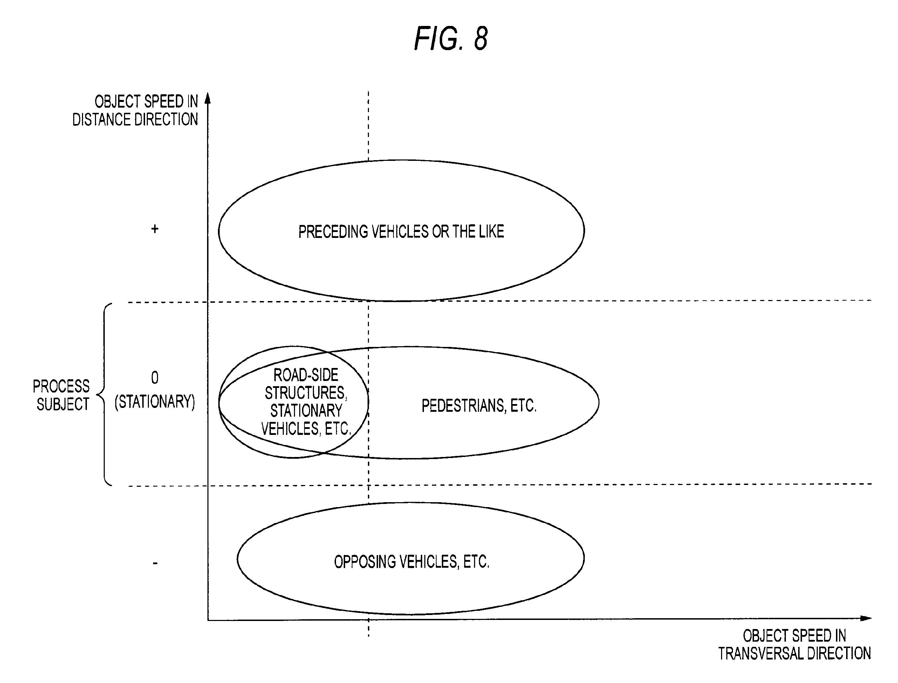

With this, as shown in Fig. 8, among objects present within the detection region, the objects whose speed in the distance direction of the automotive vehicle is greater than a predetermined threshold value, such as preceding vehicles or opposing vehicles, are excluded from the process subject. On the other hand, the objects whose speed in the distance direction of the automotive vehicle is equal to or smaller than the predetermined threshold value, such as pedestrians, road-side structures, stationary vehicles, vehicles traveling in a direction transversal to the automotive vehicle, are extracted as the process subject. Therefore, the preceding vehicles and the opposing vehicles, which are difficult to be discriminated from pedestrians for the image recognition using a movement vector, are excluded from the process subject. As a result, it is possible to decrease the processing load and to thus improve the detection performance.

The speed determining portion 152 supplies the object extraction results and the object information corresponding to the extracted objects to the ROI setting portion 161. The speed determining portion 152 also supplies information representing the object extraction results to the feature point density parameter setting portion 142.

In step S33, the ROI setting portion 161 sets the ROIs. An exemplary ROI setting method will be described with reference to Fig. 9.

First, the case will be considered in which a beam BM11 is reflected from an object 321 on the left side of Fig. 9. Although, in fact, the beam emitted from the laser radar 111 is of a vertically long elliptical shape, in Fig. 9, the beam is represented by a rectangle in order to simplify the descriptions. First, the central point OC11 of a rectangular region OR11 having substantially the same width and height as the beam BM11 is determined as the central point of the object 321. When the position of the central point OC11 in the radar coordinate system is expressed by (X1, Y1, Z1), X1 and Z1 are calculated from the object information supplied from the laser radar 111, and Y1 is calculated from the height of the position at which the laser radar 111 is installed, from the ground level. Then, a region 322 having a height of 2A (m) and a width of 2B (m), centered on the central point OC11 is set as the ROI of the object 321. The value of 2A and 2B is set to a value obtained by adding a predetermined length as a margin to the size of a normal pedestrian.

Next, the case will be considered in which beams BM12-1 to BM12-3 are reflected from an object 323 on the right side of Fig. 9. In this case, beams whose difference in distance between the reflection points is within a predetermined threshold value are determined as being reflected from the same object, and thus the beams BM12-1 to BM12-3 are grouped together. Next, the central point OC12 of a rectangular region OR12 having substantially the same width and height as the grouped beams BM12-1 to BM12-3 is determined as the central point of the object 323. When the position of the central point OC12 in the radar coordinate system is expressed by (X2, Y2, Z2), X2 and Z2 are calculated from the object information supplied from the laser radar 111, and Y2 is calculated from the height of the position at which the laser radar 111 is installed, from the ground level. Then, a region 324 having a height of 2A (m) and a width of 2B (m), centered on the central point OC12 is set as the ROI of the object 323.

The position of the ROI for each of the objects extracted by the object extracting portion 141 is transformed from the position in the radar coordinate system into the position in the forward image, based on the following relational expressions (6) to (8).

$$\begin{bmatrix} XL \\ YL \\ ZL \end{bmatrix} = R \begin{bmatrix} Xc \\ Yc \\ Zc \end{bmatrix} + T \qquad \cdots (6)$$

$$Xp = X0 + \frac{F}{dXp} \cdot \frac{Xc}{Zc} \qquad \cdots (7)$$

$$Yp = Y0 + \frac{F}{dYp} \cdot \frac{Yc}{Zc} \qquad \cdots (8)$$

In the expressions, (XL, YL, ZL) represents coordinates in the radar coordinate system; (Xc, Yc, Zc) represents coordinates in the camera coordinate system; and (Xp, Yp) represents coordinates in the coordinate system of the forward image. In the coordinate system of the forward image, the center (X0, Y0) of the forward image set by a well-known calibration method corresponds to a point of origin; the horizontal direction corresponds to the x-axis direction; the vertical direction corresponds to the y-axis direction; the right direction corresponds to the positive direction of the x-axis direction; and the upward direction corresponds to the positive direction of the y-axis direction. Incidentally, R represents a 3-by-3 matrix; and T represents a 3-by-1 matrix, both of which are set by a well-known camera calibration method. Incidentally, F represents a focal length of the camera 112; dXp represents a horizontal length of one pixel of the forward image; and dYp represents a vertical length of one pixel of the forward image.

With this, ROIs are set in the forward image for each of the extracted objects, the ROIs including the entire or a portion of the object and having a size corresponding the distance to the object.

The detailed method of transforming the radar coordinate system to the coordinate system of the forward image is described in JP-A-2006-151125, for example.

The ROI setting portion 161 supplies information representing the position of each ROI in the forward image to the feature amount calculating portion 162. The ROI setting portion 161 also supplies information representing the position of each ROI in the forward image and in the radar coordinate system to the feature point density parameter setting portion 142. The ROI setting portion 161 also supplies the information representing the position of each ROI in the forward image and in the radar coordinate system and the object information corresponding to the object within each ROI to the output portion 133.

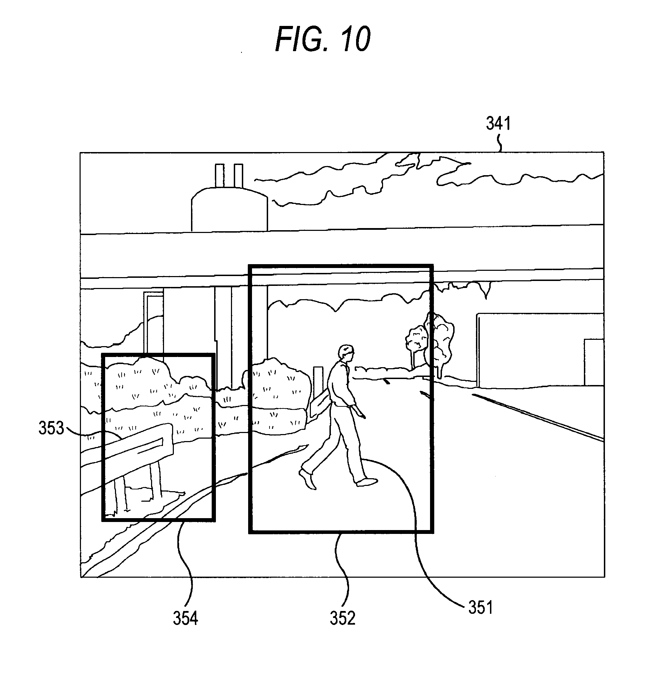

Fig. 10 shows an example of the forward image and the ROI. In the forward image 341 shown in Fig. 10, two ROIs are set; i.e., an ROI 352 containing a pedestrian 351 moving across the road in the forward area and an ROI 354 containing a portion of a guardrail 353 installed on the left side of the lanes are set. In the following, the obstacle detection process will be described using the forward image 341 as an example.

Referring to Fig. 5, in step S6, the feature amount calculating portion 162 selects one unprocessed ROI. That is, the feature amount calculating portion 162 selects one of the ROIs that have not undergone the processes of steps S7 to S9 from the ROIs set by the ROI setting portion 161. The ROI selected in step S6 will be also referred to as a select ROI.

In step S7, the obstacle detecting device 115 executes a feature point extraction process. The details of the feature point extraction process will be described with reference to the flow chart of Fig. 11.

In step S51, the feature amount calculating portion 162 calculates a feature amount. For example, the feature amount calculating portion 162 calculates the intensity at the corner of the image within the select ROI as the feature amount based on a predetermined technique (for example, the Harris corner detection method). The feature amount calculating portion 162 supplies information representing the position of the select ROI in the forward image and the feature amount of the pixels within the select ROI to the feature point extracting portion 163.

In step S52, the feature point extracting portion 163 extracts a feature point candidate. Specifically, the feature point extracting portion 163 extracts, as the feature point candidate, pixels whose feature amount is greater than a predetermined threshold value, from the pixels within the select ROI.

In step S53, the feature point extracting portion 163 sorts the feature point candidate in the descending order of the feature amount.

In step S54, the feature point density parameter setting portion 142 sets a feature point density parameter. Specifically, the feature point extracting portion 163 supplies information representing the position of the select ROI in the forward image to the feature point density parameter setting portion 142. The feature point density parameter setting portion 142 calculates the position of the select ROI in the radar coordinate system. Also, the feature point density parameter setting portion 142 estimates the height (in units of pixel) of the pedestrian in the forward image based on the following expression (9), assuming the object within the select ROI as the pedestrian.

```
height of pedestrian (pixel) = body length (m) × focal

length (pixel) ÷ distance (m) … (9)
```

In the expression (9), the body length is a constant (for example, 1.7 meters) based on the average or the like of the body length of the assumed pedestrian; the focal length is a value of the focal length of the camera 112 as represented by a pixel pitch of the imaging device of the camera 112; and the distance is a distance to the object within the select ROI, which is calculated by the position of the select ROI in the radar coordinate system.

Next, the feature point density parameter setting portion 142 calculates a feature point density parameter based on the following expression (10).

$$\text{feature point density parameter (pixel) = height of}$$

$$\text{pedestrian (pixel)} \div \text{Pmax} \dots (10)$$

In the expression, Pmax is a predetermined constant, which is set, for example, based on the number of feature points or the like, the number of feature points preferably extracted in the height direction of the pedestrian for detection of the movement of the pedestrian.

When it is assumed that the object in the forward image be the pedestrian, the feature point density parameter is a minimum value of the gap provided between the feature points such that the number of feature points extracted in the height direction of the image of the pedestrian is substantially constant regardless of the size of the pedestrian, that is, regardless of the distance to the pedestrian. That is, the feature point density parameter is set so as to decrease as the distance of the object within the select ROI from the automotive vehicle increases.

The feature point density parameter setting portion 142 supplies information representing the feature point density parameter to the feature point extracting portion 163.

In step S55, the feature point extracting portion 163 sets selection flags of the entire pixels within the ROI to ON. The selection flag is a flag representing whether the pixel can be set as the feature point; the selection flags of the pixels set as the feature point are set ON, and the selection flags of the pixels that cannot be set as the feature points are set OFF. The feature point extracting portion 163 first sets the selection flags of the entire pixels within the select ROI to ON so that the entire pixels within the select ROI can be set as the feature points.

In step S56, the feature point extracting portion 163 selects a feature point candidate on the highest order from unprocessed feature point candidates. Specifically, the feature point extracting portion 163 selects a feature point candidate on the highest order in the sorting order, that is, the feature point candidate having the greatest feature amount, from the feature point candidates that have not been subjected to the processes of steps S56 to S58 described later.

In step S57, the feature point extracting portion 163 determines whether the selection flag of the selected feature point candidate is ON. When it is determined that the selection flag of the selected feature point candidate is ON, the process of step S58 is performed.

In step S58, the feature point extracting portion 163 sets the selection flag of the pixels in the vicinity of the selected feature point candidate to OFF. Specifically, the feature point extracting portion 163 sets the selection flag of the pixels whose distance from the selected feature point candidate is within the range of the feature point density parameter to OFF. With this, it is prevented that new feature points are extracted from the pixels whose distance from the selected feature point candidate is within the range of the feature point density parameter.

In step S59, the feature point extracting portion 163 adds the selected feature point candidate to a feature point list. That is, the selected feature point candidate is extracted as the feature point.

On the other hand, when it is determined in step S57 that the selection flag of the selected feature point candidate is OFF, the processes of steps S58 and S59 are skipped so the selected feature point candidate is not added to the feature point list, and the process of step S60 is performed.

In step S60, the feature point extracting portion 163 determines whether the entire feature point candidates have been processed. When it is determined that the entire feature point candidates have not yet been processed, the process returns to the step S56. The processes of steps S56 to S60 are repeated until it is determined in step S60 that the entire feature point candidates have been processed. That is, the processes of steps S56 to S60 are performed for the entire feature point candidates within the ROI in the descending order of the feature amount.

When it is determined in step S60 that the entire feature point candidates have been processed, the process of step S61 is performed.

In step S61, the feature point extracting portion 163 outputs the extraction results, and the feature point extraction process stops. Specifically, the feature point extracting portion 163 supplies the position of the select ROI in the forward image and the feature point list to the vector detecting portion 164.

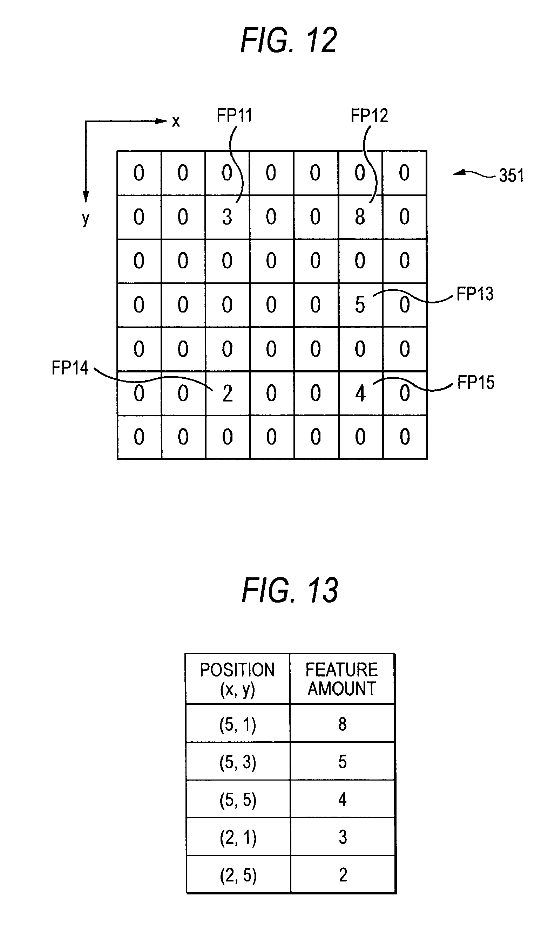

Hereinafter, a specific example of the feature point extraction process will be described with reference to Figs. 12 to 17.

Fig. 12 shows an example of the feature amount of each pixel within the ROI. Each square column within the ROI 351 shown in Fig. 12 represents a pixel, and a feature amount of the pixel is described within the pixel. The coordinates of each pixel within the ROI 351 are represented by a coordinate system in which the pixel at the top left corner of the ROI 351 is a point of origin (0, 0); the horizontal direction is the x-axis direction; and the vertical direction is the y-axis direction.

In step S52, if the pixels within the ROI 351 having a feature amount greater than 0 are extracted as the feature point candidate with a threshold value set to 0, the pixels at coordinates (2, 1), (5, 1), (5, 3), (2, 5), and (5, 5) are extracted as the feature point candidates FP11 to FP15.

In step S53, as shown in Fig. 13, in the descending order of the feature amount, the feature point candidates within the ROI 351 are sorted in the order of FP12, FP13, FP15, FP11, and FP14.

In step S54, the feature point density parameter is set; in the following, it will be described that the feature point parameter is set to two pixels.

In step S55, the selection flags of the entire pixels within the ROI 351 are set to ON.

In step S56, the feature point candidate FP12 on the highest order is first selected. In step S57, it is determined that the selection flag of the feature point candidate FP12 is ON. In step S58, the selection flags of the pixels whose distance from the feature point candidate FP12 is within the range of two pixels are set to OFF. In step S59, the feature point candidate FP12 is added to the feature point list.

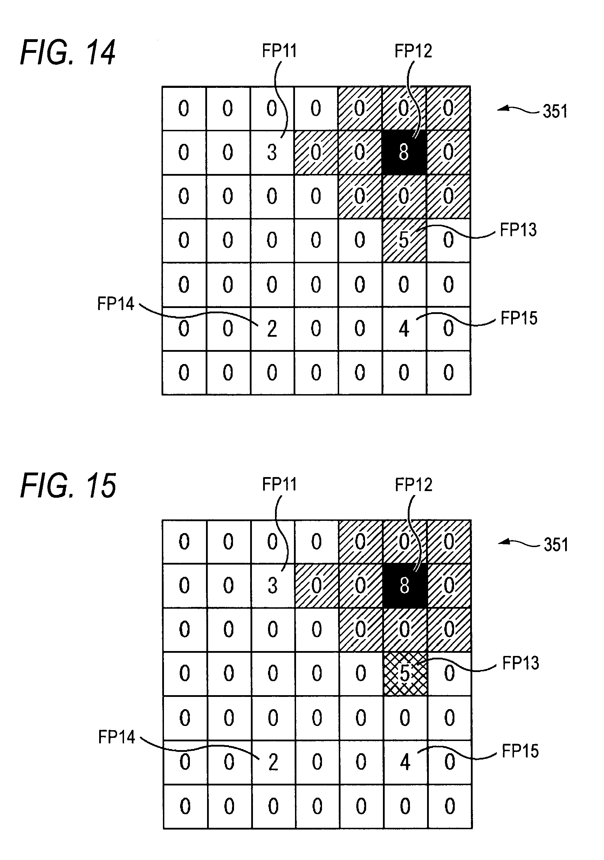

Fig. 14 shows the state of the ROI 351 at this time point. The hatched pixels in the drawing are the pixels whose selection flag is set to OFF. At this time point, the selection flag of the feature point candidate FP13, whose distance from the feature point candidate FP12 is two pixels, is set to OFF.

Thereafter, in step S60, it is determined that the entire feature point candidates have not yet been processed, and the process returns to the step S56. In step S56, the feature point candidate FP13 is subsequently selected.

In step S57, it is determined that the selection flag of the feature point candidate FP13 is OFF, and the processes of steps S58 and S59 are skipped; the feature point candidate FP13 is not added to the feature point list; and the process of step S60 is performed.

Fig. 15 shows the state of the ROI 351 at this time point. The feature point candidate FP13 is not added to the feature point list, and the selection flags of the pixels in the vicinity of the feature point candidate FP13 are not set to OFF. Therefore, the state of the ROI 351 does not change from the state shown in Fig. 14.

Thereafter, in step S60, it is determined that the entire feature point candidates have not yet been processed, and the process returns to the step S56. In step S56, the feature point candidate FP15 is subsequently selected.

In step S57, it is determined that the selection flag of the feature point candidate FP15 is ON. In step S58, the selection flags of the pixels whose distance from the feature point candidate FP15 is within the range of two pixels are set to OFF. In step S59, the feature point candidate FP15 is added to the feature point list.

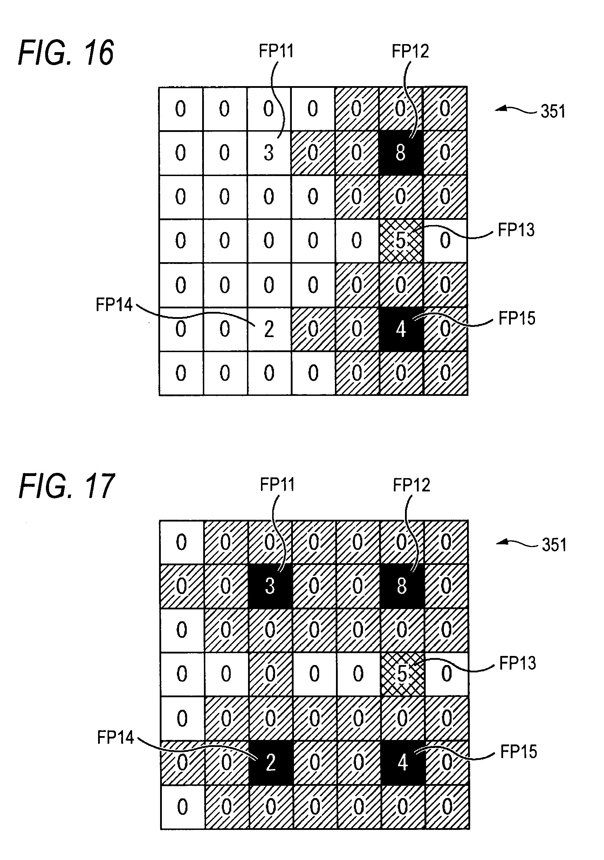

Fig. 16 shows the state of the ROI 351 at this time point. The feature point candidate FP12 and the feature point candidate FP15 are added to the feature point list, and the selection flags of the pixels, whose distance from the feature point candidate FP12 or the feature point candidate FP15 is within of the range of two pixels, are set to OFF.

Thereafter, the processes of steps S56 to S60 are performed on the feature point candidates in the order of FP11 and FP14. When the process has been completed for the feature point candidate FP14, it is determined in step S60 that the entire feature point candidates have been processed, and the process of step S61 is performed.

Fig. 17 shows the state of the ROI 351 at this time point. That is, the feature point candidates FP11, FP12, FP14, and FP15 are added to the feature point list, and the selection flags of the pixels, whose distance from the feature point candidate FP11, FP12, FP14, or FP15 is within of the range of two pixels, are set to OFF.

In step S61, the feature point list having the feature point candidates FP11, FP12, FP14, and FP15 registered therein are supplied to the vector detecting portion 164. That is, the feature point candidates FP11, FP12, FP14, and FP15 are extracted as the feature points from the ROI 351.

In this way, the feature points are extracted from the feature point candidates in the descending order of the feature amount, while the feature point candidates, whose distance from the extracted feature points is equal to or smaller than the feature point density parameter, are not extracted as the feature point. In other words, the feature points are extracted so that the gap between the feature points is greater than the feature point density parameter.

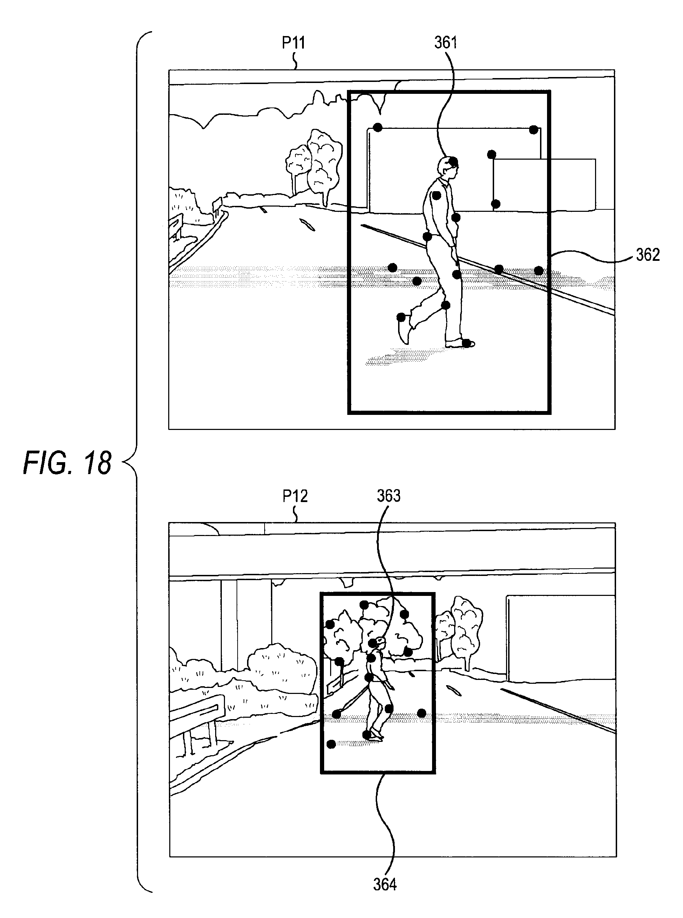

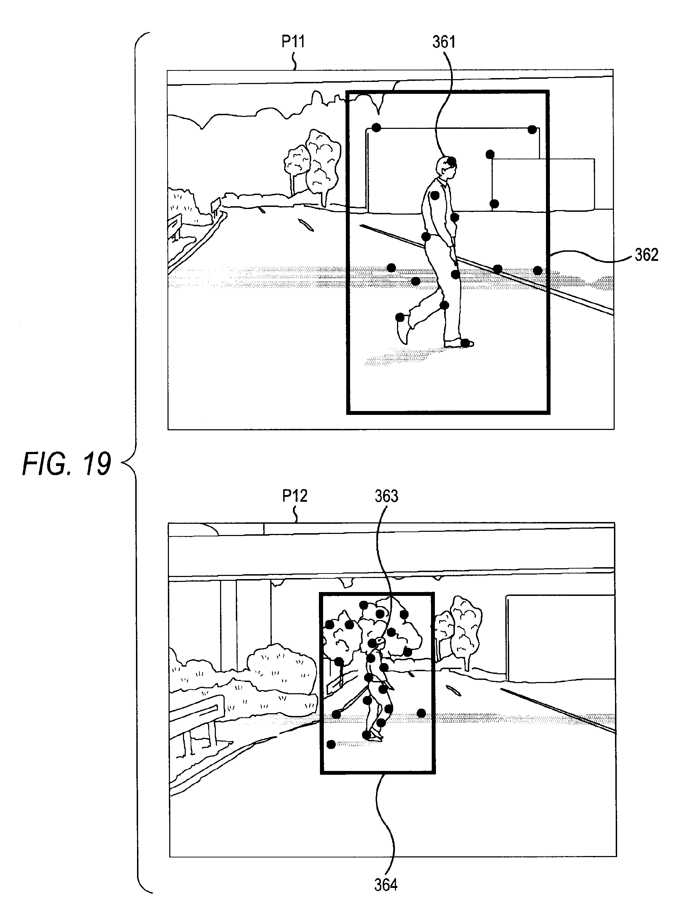

Here, referring to Figs. 18 and 19, the case in which the feature points are extracted based only on the value of the feature amount will be compared with the case in which the feature points are extracted using the above-described feature point extraction process. Fig. 18 shows an example for the case in which the feature points of the forward images P11 and P12 are extracted based only on the feature amount, and Fig. 19 shows an example for the case in which the feature points of the same forward images P11 and P12 are extracted using the above-described feature point extraction process. Incidentally, the black circles in the forward images P11 and P12 represent the feature points extracted.

In the case of extracting the feature points based only on the value of the feature amount, like the object 361 within the image P11 shown in Fig. 18, when the distance from the automotive vehicle to the object is small and the image of the object is large and clear, a sufficient number of feature points for precise extraction of the movement of the object 361 is extracted within the ROI 362 corresponding to the object 361. However, like the object 363 within the image P12, when the distance from the automotive vehicle to the object is great and the image of the object is small and unclear, the number of feature points extracted within the ROI 364 corresponding to the object 363 decreases while the number of feature points extracted from areas outside the object 363 increases. That is, the likelihood of failing to detect a sufficient number of feature points for precise detection of the movement of the object 363 increases. In addition, to the contrary, although not shown, the number of feature points extracted from the ROI 362 becomes excessively large, increasing the processing load in the subsequent stages.

On the other hand, in the case of extracting the feature points using the above-described feature point extraction process, the feature points are extracted with a higher density as the distance from the automotive vehicle to the object increases. For this reason, as shown in Fig. 19, both within the ROI 362 of the image P11 and within the ROI 364 of the image P12, suitable numbers of feature points are extracted for precise extraction of the movement of the object 361 or the object 363, respectively.

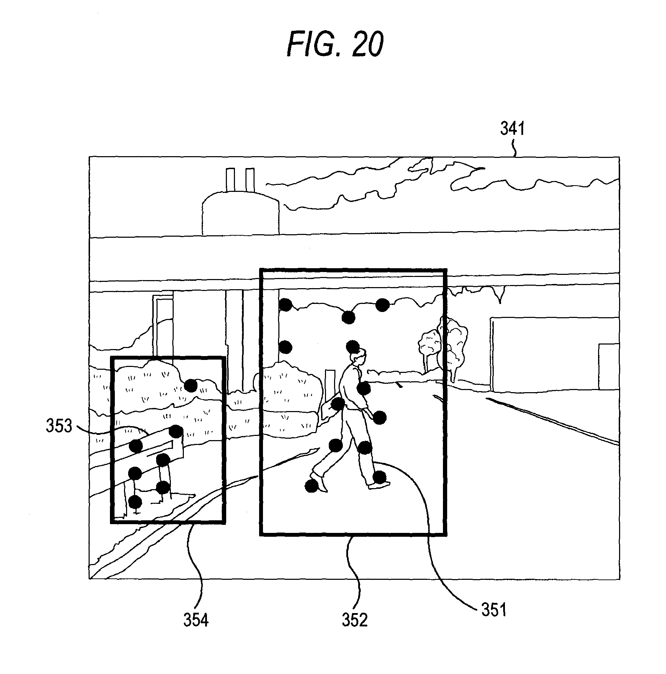

Fig. 20 shows an example of the feature points extracted from the forward image 341 shown in Fig. 10. The black circles in the drawing represent the feature points. The extracted feature points correspond to the corner and the vicinity of the images within the ROI 352 and the ROI 354.

Although in the above descriptions, the example of extracting the feature points based on the intensity at the corner of the image, as long as it is possible to extract the feature points suitable for the detection of the movement vector of the object, the feature points may be extracted using other feature amounts. Incidentally, the feature amount extracting technique is not limited to a specific technique but it is preferable to employ a technique that can detect the feature amount by a process in a precise, quick and simple manner.

Referring to Fig. 5, in step S8, the vector detecting portion 164 detects the movement vector. Specifically, the vector detecting portion 164 detects the movement vector at each feature point of the select ROI based on a predetermined technique. For example, the vector detecting portion 164 detects pixels within the forward image of the subsequent frame corresponding to the feature points within the select ROI so that a vector directed from each feature point to the detected pixel is detected as the movement vector at each feature point. The vector detecting portion 164 supplies information representing the detected movement vector and the position of the select ROI in the forward image to the clustering portion 165.

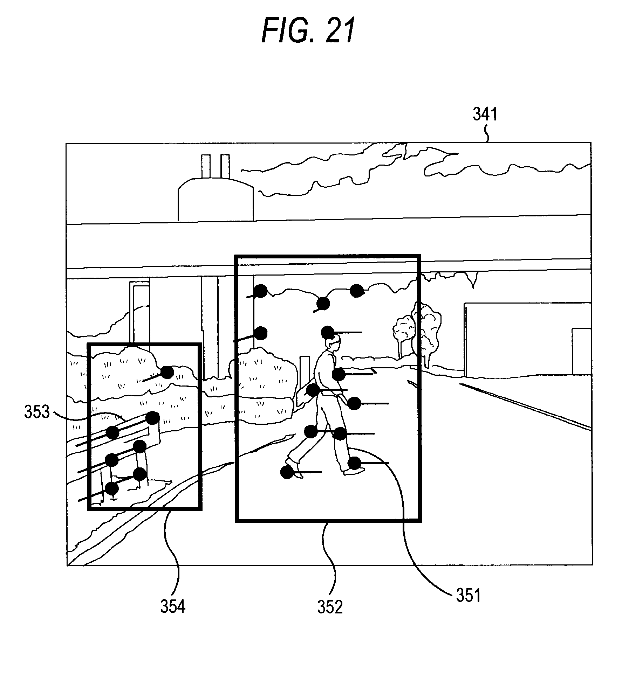

Fig. 21 shows an example of the movement vector detected from the forward image 341 shown in Fig. 10. The lines starting from the black circles in the drawing represent the movement vectors at the feature points.

A typical technique of the vector detecting portion 164 detecting the movement vector includes a well-known Lucas-Kanade method and a block matching method, for example. Incidentally, the movement vector detecting technique is not limited to a specific technique but it is preferable to employ a technique that can detect the movement vector by a process in a precise, quick and simple manner.

Referring to Fig. 5, in step S9, the clustering portion 165 performs a clustering process. Here, the details of the clustering process will be described with reference to the flow chart of Fig. 22.

In step S71, the vector transforming portion 261 selects one unprocessed feature point. Specifically, the vector transforming portion 261 selects one feature point that has not been subjected to the processes of steps S72 and S73 from the feature points within the select ROI. In the following, the feature point selected in step S71 will be also referred to as a select feature point.

In step S72, the vector transforming portion 261 transforms the movement vector at the select feature point based on the rotation angle of the camera 112. Specifically, the vector transforming portion 261 calculates the angle that the automotive vehicle has rotated in the turning direction between the presently processed frame and the subsequent frame of the forward image, that is, the rotation angle of the camera 112 in the turning direction of the automotive vehicle, based on the angular speed in the turning direction of the automotive vehicle detected by the yaw rate sensor 114 and an inter-frame spacing of the camera 112. The vector transforming portion 261 calculates the movement vector (a transformation vector) generated by the movement of the subject at the select feature point and the movement of the automotive vehicle (the camera 112) in the distance direction by subtracting a component generated by the rotation of the camera 112 in the turning direction of the automotive vehicle from the components of the movement vector at the select feature point. Incidentally, the magnitude of the component of the movement vector generated by the rotation of the camera 112 in the turning direction of the automotive vehicle is independent from the distance to the subject.

The vector transforming portion 261 supplies information representing the calculated transformation vector and the position of the select ROI in the forward image to the vector classifying portion 262.

In step S73, the vector classifying portion 262 detects the type of the movement vector. Specifically, the vector classifying portion 262 first acquires information representing the distance from the automotive vehicle to the object within the select ROI from the ROI setting portion 161.

When the camera 112 is not rotating in the turning direction of the automotive vehicle, the direction and magnitude of the movement vector (hereinafter referred to as a background vector) of the pixels on a stationary object within the forward image, that is, the direction and magnitude of the movement vector generated by only the movement in the distance direction of the automotive vehicle can be calculated based on the position of the pixels in the forward image, the distance of the stationary object from the automotive vehicle, and the distance that the automotive vehicle has traveled within the time between two frames of the forward image used in detection of the movement vector. Since the component generated by the rotation of the camera 112 in the turning direction of the automotive vehicle is excluded from the transformation vector, by comparing the transformation vector at the select feature point and the background vector calculated theoretically at the select feature point with each other, it is possible to detect whether the movement vector at the select feature point is the movement vector (hereinafter referred to as a moving object vector) of a moving object or the background vector. In other words, it is possible to detect whether the select feature point is a pixel on the moving object or a pixel on the stationary object.

When the direction in the x-axis direction (in the horizontal direction of the forward image) of the transformation vector at the select feature point is different from that of the theoretical background vector (a movement vector at the select feature point when the camera 112 is not rotating and the select feature point is a pixel on the stationary object), the vector classifying portion 262 determines the movement vector at the select feature point as being a moving object vector when the following expression (11) is satisfied, while the vector classifying portion 262 determines the movement vector at the select feature point as being a background vector when the following expression (11) is not satisfied.

$$|v_x| > 0 \ \dots \ (11)$$

In the expression, $v_x$ represents an x-axis directional component of the transformation vector. That is, the movement vector at the select feature point is determined as being the moving object vector when the directions in the x-axis direction of the transformation vector at the select feature point and the theoretical background vector are different from each other, while the movement vector at the select feature point is determined as being the background vector when the directions in the x-axis direction are the same.

When the direction in the x-axis direction of the transformation vector at the select feature point is the same as that of the theoretical background vector, the vector classifying portion 262 determines the movement vector at the select feature point as being the moving object vector when the following expression (12) is satisfied, while the vector classifying portion 262 determines the movement vector at the select feature point as being the background vector when the following expression (12) is not satisfied.

$$|v_x| > x \times t_Z \div Z \ \dots \ (12)$$

In the expression, x represents the distance (length) of the select feature point in the x-axis direction from the central point (X0, Y0) of the forward image; $t_z$ represents the distance that the automotive vehicle has traveled within the time between the two frames of the forward image used in the detection of the movement vector; and Z represents the distance of the object within the select ROI from the automotive vehicle. That is, the right-hand side of the expression (12) represents the magnitude of the horizontal component of the movement vector at the select feature point when the camera 112 is not rotating and the select feature point is on the stationary object. When the directions in the x-axis direction of the transformation vector at the select feature point and the theoretical background vector are the same, the movement vector at the select feature point is determined as being the moving object vector when the magnitude of the x-axis directional component of the transformation vector is greater than that of the right-hand side of the expression (12), while the movement vector at the select feature point is determined as being the background vector when the magnitude of the x-axis directional component of the transformation vector is equal to or smaller than that of the right-hand side of the expression (12).

In step S74, the vector classifying portion 262 determines whether the entire feature points have been processed. When it is determined that the entire feature points have not yet been processed, the process returns to the step S71. The processes of steps S71 to S74 are repeated until it is determined in step S74 that the entire feature points have been processed. That is, the types of the movement vectors at the entire feature points within the ROI are extracted.

Meanwhile, when it is determined in step S74 that the entire feature points have been processed, the process of step S75 is performed.

In step S75, the object classifying portion 263 detects the type of the object. Specifically, the vector classifying portion 262 supplies information representing the type of each movement vector within the select ROI and the position of the select ROI in the forward image to the object classifying portion 263.

The object classifying portion 263 detects the type of the objects within the select ROI based on the classification results of the movement vectors within the select ROI. For example, the object classifying portion 263 determines the objects within the select ROI as being the moving object when the number of moving object vectors within the select ROI is equal to or greater than a predetermined threshold value. Meanwhile the object classifying portion 263 determines the objects within the select ROI as being the stationary object when the number of moving object vectors within the select ROI is smaller than the predetermined threshold value. Alternatively, the object classifying portion 263 determines the objects within the select ROI as being the moving object when the ratio of the moving object vectors to the entire movement vectors within the select ROI is equal to or greater than a predetermined threshold value, for example. Meanwhile, the object classifying portion 263 determines the objects within the select ROI as being the stationary object when the ratio of the moving object vectors to the entire movement vectors within the select ROI is smaller than the predetermined threshold value.

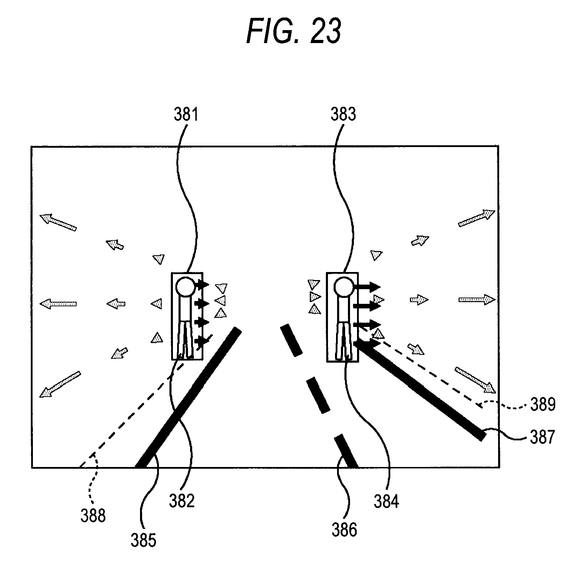

Hereinafter, the specific example of the object classification process will be described with reference to Fig. 23. Fig. 23 is a diagram schematically showing the forward image, in which the black arrows in the drawing represent the movement vectors of the object 382 within the ROI 381 and the movement vectors of the object 384 within the ROI 383; and other arrows represent the background vectors. As shown in Fig. 23, the background vectors change their directions at a boundary substantially at the center of the forward image in the x-axis direction; the magnitudes thereof increase as they go closer to the left and right ends. Incidentally, lines 385 to 387 represent lane markings on the road; and lines 388 and 389 represent auxiliary lines for indicating the boundaries of the detection region.

As shown in Fig. 23, the object 382 moves in a direction substantially opposite to the direction of the background vector. Therefore, since the directions in the x-axis direction of the movement vectors of the object 382 and the theoretical background vector of the object 382 are different from each other, the movement vectors of the object 382 are determined as being the moving object vector based on the above-described expression (11), and the object 382 is classified as the moving object.

On the other hand, the object 384 moves in a direction substantially the same as the direction of the background vector. That is, the directions in the x-axis direction of the movement vectors of the object 384 and the theoretical background vector of the object 384 are the same. In this case, the movement vectors of the object 384 correspond to the sum of the component generated by the movement of the automotive vehicle and the component generated by the movement of the object 384, and the magnitude thereof is greater than the magnitude of the theoretical background vector. For this reason, the movement vectors of the object 384 are determined as being the moving object vector based on the above-described expression (12), and the object 384 is classified as the moving object.

In this way, it is possible to detect whether the object is the moving object or like in a precise manner regardless of the relationship between the movement direction of the object and the direction of the theoretical background vector.

As described in JP-A-6-282655, for example, when the moving objects are detected based only on the directions of the movement vector and the theoretical background vector in the x-axis direction, it is possible to classify the object 382 moving in a direction substantially opposite to the direction of the background vector as the moving object but it is not possible to classify the object 384 moving in a direction substantially the same as the direction of the background vector.

Referring to Fig. 22, in step S76, the object classifying portion 263 determines whether the object is the moving object. When the object classifying portion 263 determines the object within the select ROI as being the moving object based on the processing results in step S75, the process of step S77 is performed.

In step S77, the moving object classifying portion 264 detects the type of the moving object, and the clustering process is completed. Specifically, the object classifying portion 263 supplies information representing the position of the select ROI in the forward image to the moving object classifying portion 264. The moving object classifying portion 264 detects whether the moving object, which is the object within the select ROI, is a vehicle, using a predetermined image recognition technique, for example. Incidentally, since in the above-described ROI setting process of step S5, the preceding vehicles and the opposing vehicles are excluded from the process subject, by this process, it is detected whether the moving object within the select ROI is the vehicle traveling in the transversal direction of the automotive vehicle.

In this way, since the detection subject is narrowed down to the moving object and it is detected whether the narrowed-down detection subject is the vehicle traveling in the transversal direction of the automotive vehicle, it is possible to improve the detection precision. When it is not determined that the moving object within the select ROI is a vehicle, the moving object is an object other than a vehicle that moves within the detection region, and the likelihood of being a person increases.

The moving object classifying portion 264 supplies information representing the type of the object within the select ROI and the position of the select ROI in the forward image to the output portion 133.

On the other hand, when it is determined in step S76 that the object within the select ROI is a stationary object, the process of step S78 is performed.

In step S78, the stationary object classifying portion 265 detects the type of the stationary object, and the clustering process is completed. Specifically, the object classifying portion 263 supplies information representing the position of the select ROI in the forward image to the stationary object classifying portion 265. The stationary object classifying portion 265 determines whether the stationary object, which is the object within the select ROI, is a person, using a predetermined image recognition technique, for example. That is, it is determined whether the stationary object within the select ROI is a person or other objects (for example, a road-side structure, a stationary vehicle, etc.).

In this way, since the detection subject is narrowed down to the stationary object and it is detected whether the narrowed-down detection subject is a stationary person, it is possible to improve the detection precision.

The stationary object classifying portion 265 supplies information representing the type of the object within the select ROI and the position of the select ROI in the forward image to the output portion 133.

Referring to Fig. 5, in step S10, the feature amount calculating portion 162 determines whether the entire ROIs have been processed. When it is determined that the entire ROIs have not yet been processed, the process returns to the step S6. The processes of steps S6 to S10 are repeated until it is determined in step S10 that the entire ROIs have been processed. That is, the types of the objects within the entire set ROIs are detected.

In step S11, the output portion 133 supplies the detection results. Specifically, the output portion 133 supplies information representing the detection results including the position, movement direction, and speed of the objects in the radar coordinate system to the vehicle control device 116, the objects having a high likelihood of being a person and including the object within the ROI, from which a moving object other than a vehicle is detected, among the ROIs from which the moving object is detected and the object within the ROI, from which a person is detected, among the ROIs from which the stationary object is detected.

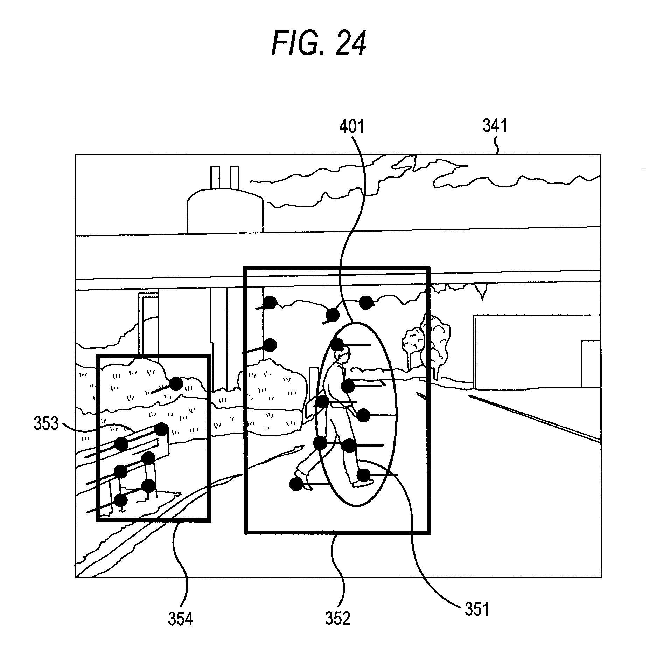

Fig. 24 is a diagram showing an example of the detection results for the forward image 341 shown in Fig. 10. In the example, an object 351 within an area 401 of the ROI 352 is determined as being highly likely to be a person, and the information representing the detection results including the position, movement direction, and speed of the object 351 in the radar coordinate system is supplied to the vehicle control device 116.

In step S12, the vehicle control device 116 executes a process based on the detection results. For example, the vehicle control device 116 outputs a warning signal to urge users to avoid contact or collision with the detected person by outputting images or sound using a display device (not shown), a speaker (not shown), or the like. In addition, the vehicle control device 116 controls the speed or traveling direction of the automotive vehicle so as to avoid the contact or collision with the detected person.

In step S13, the obstacle detection system 101 determines whether the process is to be finished. When it is not determined that the process is to be finished, the process returns to the step S5. The processes of steps S5 to S13 are repeated until it is determined in step S13 that the process is to be finished.

On the other hand, when the engine of the automotive vehicle stops and it is determined in step S13 that the process is to be finished, the obstacle detection process is finished.

In this way, it is possible to detect whether the objects present in the forward area of the automotive vehicle is a moving object or a stationary object in a precise manner. As a result, it is possible to improve the performance of detecting a person present in the forward area of the automotive vehicle.

In addition, since the region subjected to the detection process is restricted to within the ROI, it is possible to decrease the processing load, and to thus speed up the processing speed or decrease the cost of devices necessary for the detection process.

In addition, since the density of the feature points extracted from the ROI is appropriately set in accordance with the distance to the object, it is possible to improve the detection performance and to thus prevent the number of feature points extracted from becoming unnecessarily large and thus increasing the processing load of the detection.

In the above descriptions, the example has been shown in which the position, movement direction, speed, or the like of a person present in the forward area of the automotive vehicle are output as the detection results from the obstacle detecting device 115. However, for example, the type, position, movement direction, speed or the like of the entire detected moving objects and the entire detected stationary objects may be output as the detection results. Alternatively, for example, the position, movement direction, speed, or the like of an object of a desired type such as a vehicle traveling in the transversal direction may be output as the detection results.

In addition, according to the needs, the moving object classifying portion 264 and the stationary object classifying portion 265 may be configured to perform higher precision image recognition in order to classify the type of the moving object or the stationary object in a more detailed manner.

If it is not necessary to classify the type of the moving object or the stationary object, the type of the moving object or the stationary object may not need to be detected, and the position, movement direction, speed or the like of the moving object or the stationary object may be output as the detection results.

In the ROI setting process of Fig. 6, objects having a speed greater than a predetermined threshold value were excluded from the process subject. However, to the contrary, only the objects having a speed greater than a predetermined threshold value may be used as the process subject. With this, it is possible to decrease the processing load of the detection without deteriorating the precision of detecting the opposing vehicles and the preceding vehicles.

In the ROI setting process of Fig. 6, ROIs of the objects having a speed greater than a predetermined threshold value may be determined, and regions other than the determined ROIs may be used as the process subject.

In addition, the feature point extracting technique of Fig. 11 may be applied to the feature point extraction in the image recognition, for example, in addition to the above-described feature point extraction for detection of the movement vector.

In the above descriptions, the example of detecting objects in the forward area of the vehicle has been shown. However, the present invention can be applied to the case of detecting objects in areas other than the forward area.

In the above descriptions, the example has been shown in which the feature point density parameter is set based on the number of feature points which is preferably extracted in the height direction of an image. However, for example, the feature point density parameter may be set based on the number of feature points which is preferably extracted per a predetermined area of the image.

The present invention can be applied to an obstacle detection device provided on a vehicle, for example, an automobile, a two-wheeled motor vehicle, an electric train, and the like.

The above-described series of processes of the obstacle detecting device 115 may be executed by hardware or software. When the series of processes of the obstacle detecting device 115 are executed by software, programs constituting the software are installed from a computer recording medium to a computer integrated into specific-purpose hardware or to a general-purpose personal computer or the like capable of executing various functions by installing various programs therein.

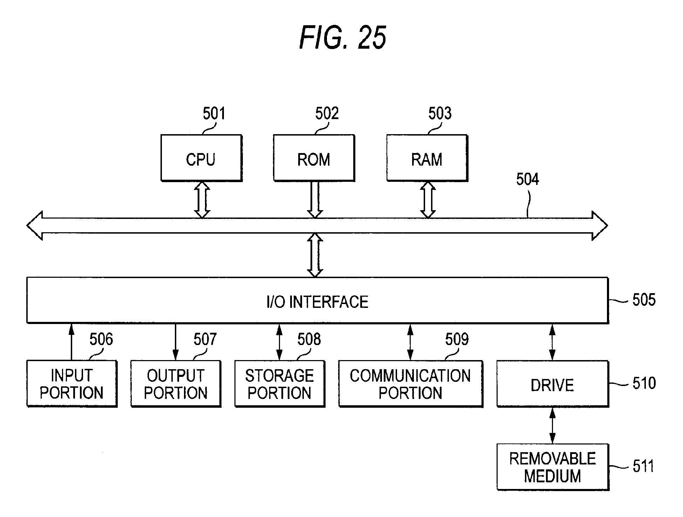

Fig. 25 is a block diagram showing an example of a hardware configuration of a computer which executes the above-described series of processes of the obstacle detecting device 115 by means of programs.

In the computer, a CPU (Central Processing Unit) 501, a ROM (Read Only Memory) 502, and a RAM (Random Access Memory) 503 are interconnected by a bus 504.

An I/O interface 505 is further connected to the bus 504. The I/O interface 505 is connected to an input portion 506 configured by a keyboard, a mouse, a microphone, or the like, to an output portion 507 configured by a display, a speaker, or the like, to a storage portion 508 configured by a hard disk, a nonvolatile memory, or the like, to a communication portion 509 configured by a network interface or the like, and to a drive 510 for driving a removable medium 511 such as a magnetic disc, an optical disc, an optomagnetic disc, or a semiconductor memory.

In the computer having such a configuration, the CPU 501 loads programs stored in the storage portion 508 onto the RAM 503 via the I/O interface 505 and the bus 504 and executes the programs, whereby the above-described series of processes are executed.

The programs executed by the computer (the CPU 501) are recorded on the removable medium 511 which is a package medium configured by a magnetic disc (inclusive of flexible disc), an optical disc (CD-ROM: Compact Disc-Read Only Memory), a DVD (Digital Versatile Disc), an optomagnetic disc, a semiconductor memory, or the like, and are provided through a wired or wireless transmission medium, called the local area network, the Internet, the digital satellite broadcasting.

The programs can be installed onto the storage portion 508 via the I/O interface 505 by mounting the removable medium 511 onto the drive 510. In addition, the programs can be received to the communication portion 509 via a wired or wireless transmission medium and be installed into the storage portion 508. Besides, the programs may be installed in advance into the ROM 502 or the storage portion 508.

The programs executed by the computer may be a program configured to execute a process in a time-series manner according to the order described in the present specification, or may be a program configured to execute a process in a parallel manner, or on an as needed basis, in which the process is executed when there is a call.

The term, system, as used in the present specification means an overall device constructed by a plurality of devices, means, or the like.

The embodiments of the present invention are not limited to the above-described embodiments, but various modifications are possible without departing from the spirit of the present invention.

**Claims**

1. An image processing apparatus, comprising:

   a feature amount calculating means for calculating a feature amount of pixels within a region of an object detected by a radar, the region including the entire or a portion of the object and being a designated region in an image; and
   a feature point extracting means for extracting a feature point for detecting the features of the object from a feature point candidate, which is the pixels within the region having a feature amount equal to or greater than a predetermined threshold value, the feature point being extracted with a higher density as the distance of the object from a vehicle increases.

2. The image processing apparatus according to Claim 1, further comprising a minimum gap setting means for setting a minimum gap, which is the minimum value of the gap provided between the feature points, the minimum gap decreasing as the distance of the object from the vehicle increases,

wherein the feature point extracting means extracts the feature point from the feature point candidate so that the gap between the feature points is greater than the minimum gap.

3. The image processing apparatus according to Claim 2, wherein the feature point extracting means extracts the feature point from the feature point candidate in the descending order of the feature amount, and wherein the feature point candidate whose distance from the extracted feature point is equal to or smaller than the minimum gap is not extracted as the feature point.

4. The image processing apparatus according to Claim 1, wherein the feature amount is an intensity of the corner of the image.

5. The image processing apparatus according to Claim 1, wherein the feature point is used to detect a movement vector of the object.

6. The image processing apparatus according to Claim 1,
wherein the image is an image of the surroundings of the vehicle captured by a camera provided on the vehicle,
wherein the radar is provided on the vehicle, and
wherein the object is an object detected by the radar from the surroundings of the vehicle.

7. An image processing method, comprising:

a feature amount calculating step for calculating a feature amount of pixels within a region of an object detected by a radar, the region including the entire or a portion of the object and being a designated region in an image; and
a feature point extracting step for extracting a feature point for detecting the features of the object from a feature point candidate, which is the pixels within the region having a feature amount equal to or greater than a predetermined threshold value, the feature point being extracted with a higher density as the distance of the object from a vehicle increases.

8. A program for causing a computer to execute a process, the process comprising:

a feature amount calculating step for calculating a feature amount of pixels within a region of an object detected by a radar, the region including the entire or a portion of the object and being a designated region in an image; and
a feature point extracting step for extracting a feature point for detecting the features of the object from a feature point candidate, which is the pixels within the region having a feature amount equal to or greater than a predetermined threshold value, the feature point being extracted with a higher density as the distance of the object from a vehicle increases.

## FIG. 1

EP 1 944 721 A2

# FIG. 2

FIG. 3

## FIG. 4

## FIG. 5

```
┌─────────────────────────────────┐
│  START OBSTACLE DETECTION PROCESS │
└─────────────────────────────────┘
                │
    ┌───────────────────────────┐
    │   START DETECTING OBJECT    │─── S1
    └───────────────────────────┘
                │
    ┌───────────────────────────┐
    │    START IMAGE CAPTURING    │─── S2
    └───────────────────────────┘
                │
    ┌───────────────────────────┐
    │ START DETECTING VEHICLE SPEED│─── S3
    └───────────────────────────┘
                │
    ┌─────────────────────────────────────────┐
    │ START DETECTING ANGULAR SPEED IN          │─── S4
    │ TURNING DIRECTION OF AUTOMOTIVE VEHICLE   │
    └─────────────────────────────────────────┘
                │
    ┌───────────────────────────┐
    │     ROI SETTING PROCESS     │─── S5
    └───────────────────────────┘
                │
    ┌───────────────────────────┐
    │  SELECT ONE UNPROCESSED ROI │─── S6
    └───────────────────────────┘
                │
    ┌───────────────────────────┐
    │          FEATURE            │─── S7
    │   POINT EXTRACTION PROCESS  │
    └───────────────────────────┘
                │
    ┌───────────────────────────┐
    │    DETECT MOVEMENT VECTOR   │─── S8
    └───────────────────────────┘
                │
    ┌───────────────────────────┐
    │      CLUSTERING PROCESS     │─── S9
    └───────────────────────────┘
                │
        NO  ╱ ENTIRE ROIS HAVE BEEN ╲  S10
      ◄─────╲      PROCESSED?        ╱
             │ YES
    ┌───────────────────────────┐
    │    OUPUT DETECTION RESULTS  │─── S11
    └───────────────────────────┘
                │
    ┌───────────────────────────┐
    │ EXECUTE PROCESS ACCORDING    │─── S12
    │   TO DETECTION RESULTS       │
    └───────────────────────────┘
                │
        NO  ╱                    ╲  S13
      ◄─────╲   FINISH PROCESS?   ╱
             │ YES
         ┌────────┐
         │  END   │
         └────────┘
```

## FIG. 6

```
┌──────────────────────────────────┐
│    START ROI SETTING PROCESS     │
└──────────────────────────────────┘
                 │
                 ▼
┌──────────────────────────────────┐
│  NARROW DOWN PROCESS SUBJECT     │── S31
│    BASED ON POSITION OF OBJECT   │
└──────────────────────────────────┘
                 │
                 ▼
┌──────────────────────────────────┐
│  NARROW DOWN PROCESS SUBJECT     │── S32
│    BASED ON OBJECT SPEED         │
└──────────────────────────────────┘
                 │
                 ▼
┌──────────────────────────────────┐
│            SET ROI               │── S33
└──────────────────────────────────┘
                 │
                 ▼
          ┌──────────────┐
          │    RETURN    │
          └──────────────┘
```

# FIG. 7

## FIG. 8

OBJECT SPEED IN
DISTANCE DIRECTION

PRECEDING VEHICLES OR THE LIKE

+

PROCESS
SUBJECT

0
(STATIONARY)

ROAD-SIDE
STRUCTURES,
STATIONARY
VEHICLES, ETC.

PEDESTRIANS, ETC.

−

OPPOSING VEHICLES, ETC.

OBJECT SPEED IN
TRANSVERSAL DIRECTION

EP 1 944 721 A2

FIG. 9

EP 1 944 721 A2

# FIG. 10

## FIG. 11

```
         ( START FEATURE POINT )
         (  EXTRACTION PROCESS  )
                    │
                    ▼
    ┌───────────────────────────────┐
    │   CALCULATE FEATURE AMOUNT     │── S51
    └───────────────────────────────┘
                    │
                    ▼
    ┌───────────────────────────────┐
    │           EXTRACT             │── S52
    │   FEATURE POINT CANDIDATES     │
    └───────────────────────────────┘
                    │
                    ▼
  ┌─────────────────────────────────────┐
  │  SORT FEATURE POINT CANDIDATES IN   │── S53
  │ DESCENDING ORDER OF FEATURE POINT   │
  └─────────────────────────────────────┘
                    │
                    ▼
    ┌───────────────────────────────┐
    │   SET FEATURE POINT DENSITY    │── S54
    │          PARAMETER             │
    └───────────────────────────────┘
                    │
                    ▼
    ┌───────────────────────────────┐
    │     SET SELECTION FLAGS OF     │── S55
    │ ENTIRE PIXELS WITHIN ROI TO ON │
    └───────────────────────────────┘
                    │
                    ▼
    ┌───────────────────────────────┐
    │ SELECT FEATURE POINT CANDIDATE ON │── S56
    │ HIGHEST ORDER FROM UNPROCESSED    │
    │    FEATURE POINT CANDIDATES       │
    └───────────────────────────────┘
                    │
                    ▼
        ┌─────────────────────────┐  S57
   NO  / SELECTION FLAG OF SELECTED FEATURE \
  ◄────<  POINT CANDIDATE IS SET TO ON?      >
        \                                 /
                    │ YES
                    ▼
    ┌───────────────────────────────┐
    │   SET SELECTION FLAG OF PIXELS IN │── S58
    │   VICINITY OF SELECTED FEATURE    │
    │     POINT CANDIDATE TO OFF        │
    └───────────────────────────────┘
                    │
                    ▼
    ┌───────────────────────────────┐
    │    ADD SELECTED FEATURE POINT     │── S59
    │  CANDIDATE TO FEATURE POINT LIST  │
    └───────────────────────────────┘
                    │
                    ▼
        ┌─────────────────────────┐  S60
   NO  / ENTIRE FEATURE POINT CANDIDATES \
  ◄────<    HAVE BEEN PROCESSED?          >
        \                             /
                    │ YES
                    ▼
    ┌───────────────────────────────┐
    │    OUTPUT EXTRACTION RESULTS    │── S61
    └───────────────────────────────┘
                    │
                    ▼
              ( RETURN )
```

## FIG. 12

| | | FP11 | | | FP12 | | |
|---|---|---|---|---|---|---|---|

x →

| 0 | 0 | 0 | 0 | 0 | 0 | 0 |
|---|---|---|---|---|---|---|
| 0 | 0 | 3 | 0 | 0 | 8 | 0 |
| 0 | 0 | 0 | 0 | 0 | 0 | 0 |
| 0 | 0 | 0 | 0 | 0 | 5 | 0 |
| 0 | 0 | 0 | 0 | 0 | 0 | 0 |
| 0 | 0 | 2 | 0 | 0 | 4 | 0 |
| 0 | 0 | 0 | 0 | 0 | 0 | 0 |

351

FP13

FP14

FP15

## FIG. 13

| POSITION (x, y) | FEATURE AMOUNT |
|---|---|
| (5, 1) | 8 |
| (5, 3) | 5 |
| (5, 5) | 4 |
| (2, 1) | 3 |
| (2, 5) | 2 |

*FIG. 14*

*FIG. 15*

*FIG. 16*

*FIG. 17*

FIG. 18

FIG. 19

P11
361
362

P12
363
364

# FIG. 20

## FIG. 21

# FIG. 22

```
              ╭─────────────────────────────╮
              │   START CLUSTERING PROCESS   │
              ╰─────────────────────────────╯
                            │
                            ▼  ◄─────────────────────┐
              ┌─────────────────────────────┐        │
      S71 ─── │   SELECT ONE UNPROCESSED     │        │
              │        FEATURE POINT         │        │
              └─────────────────────────────┘        │
                            │                         │
                            ▼                         │
              ┌─────────────────────────────┐        │
              │ TRANSFORM MOVEMENT VECTOR AT │        │
      S72 ─── │ SELECTED FEATURE POINT BASED │        │
              │  ON ROTATION ANGLE OF CAMERA │        │
              └─────────────────────────────┘        │
                            │                         │
                            ▼                         │
              ┌─────────────────────────────┐        │
      S73 ─── │           DETECT             │        │
              │    TYPE OF MOVEMENT VECTOR   │        │
              └─────────────────────────────┘        │
                            │                         │
       S74                  ▼                         │
          ╱────────────────────────────────╲   NO    │
          │  ENTERING FEATURE POINTS         ├────────┘
          │  HAVE BEEN PROCESSED?            │
          ╲────────────────────────────────╱
                       YES  │
                            ▼
              ┌─────────────────────────────┐
      S75 ─── │      DETECT TYPE OF OBJECT   │
              └─────────────────────────────┘
                            │
       S76                  ▼
          ╱────────────────────────────────╲   NO
          │        MOVING OBJECT?            ├────────┐
          ╲────────────────────────────────╱         │
                       YES  │                         │
                            ▼                         ▼
              ┌──────────────────┐       ┌──────────────────┐
      S77 ─── │  DETECT TYPE OF  │       │  DETECT TYPE OF  │ ─── S78
              │  MOVING OBJECT   │       │ STATIONARY OBJECT│
              └──────────────────┘       └──────────────────┘
                       │                          │
                       ▼◄─────────────────────────┘
                  ╭──────────╮
                  │  RETURN  │
                  ╰──────────╯
```

# FIG. 23

# FIG. 24

## FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200524754 A
- JP 2006311505 A
- JP 2006151125 A
- JP 6282655 A